# EUROPÄISCHE PATENTSCHRIFT

(11) **EP 1 310 218 B1**
(45) Veröffentlichungstag und Bekanntmachung des Hinweises auf die Patenterteilung: **15.10.2008**
(21) Anmeldenummer: 02019468.4
(22) Anmeldetag: 30.08.2002
(51) Int. Cl.: A61C 19/00

(54) **Lichthärtegerät**
Photo-curing apparatus
Appareil de photopolymérisation

(30) Priorität: 09.11.2001 DE 10155034
(43) Veröffentlichungstag der Anmeldung: 14.05.2003
(73) Patentinhaber: Ivoclar Vivadent AG, 9494 Schaan (LI)
(72) Erfinder: Burtscher, Peter, Dr., 6830 Rankweil (AT); Plank, Wolfgang, 6830 Rankweil (AT); Rohner, Gottfried, 9450 Altstätten (CH)
(74) Vertreter: Baronetzky, Klaus

(56) Entgegenhaltungen:
- EP-A- 0 151 686
- EP-A- 0 879 582
- EP-A- 1 138 276
- WO-A-00/45733
- WO-A-01/60280

## Beschreibung

Die Erfindung betrifft ein Lichthärtgerät, gemäß dem Oberbegriff von Anspruch 1, sowie ein Verfahren zum Polymerisieren von polymerisierbaren Massen, gemäß dem Oberbegriff von Anspruch 12.

Derartige Lichthärtgeräte werden verwendet, wenn lichtpolymerisierbare Massen gezielt gehärtet werden sollen.

Die durch Lichthärtgeräte gehärteten beim Stand der Technik eingesetzten polymerisierbaren Massen sind z.B. Zemente, die alle im Überschuss verwendet werden müssen. Diese Überschüsse sind nach der Aushärtung extrem hart und es bedarf eines hohen Zeitaufwandes, diese Überschüsse mit geeigneten zahnärztlichen Instrumenten zu entfernen, beispielsweise durch Fräsen. Ausserdem bedeutet die Entfernung harter Überschüsse eine höhere Abnützung der Schleif- bzw. Fräsinstrumente.

Beispielsweise ist es vorgeschlagen worden, zwei Photoinitiatoren zu verwenden, die unterschiedliche spektrale Empfindlichkeitsmaxima aufweisen und diese Massen dann mit Lampen mit entsprechenden Emissionsspektren durchzuhärten.

Ferner ist es bereits vorgeschlagen worden, bei einer photopolymerisierbaren Massen, die zwei verschiedene Photoinitiatoren aufweist, die Masse zunächst über den ersten Photoinitiator mit einer entsprechenden Wellenlänge teilweise auszuhärten, dann den Überschuss zu entfernen, und dann über den zweiten Photoinitiator eine Endhärtung vorzunehmen. Dieses System hat sich jedoch nicht durchgesetzt, nachdem die Realisierung von zwei Photoinitiatoren recht aufwendig ist und die Wechselwirkung bei Doppelsystemen und lediglich teilweiser Aushärtung schwierig zu steuern ist. Daher wird üblicherweise der Überschuss nach dem Durchhärten entfernt, was aber einen erheblichen größeren Zeitaufwand erfordert.

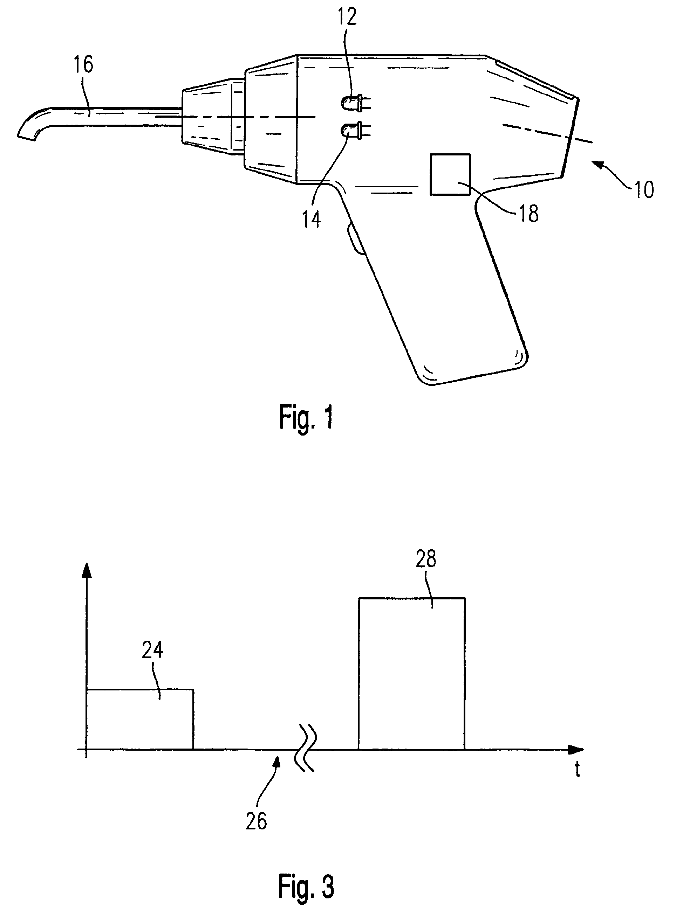

Die WO 00/45733 A (DECAUDIN JEAN MICHEL) offenbart ein Lichthärtgerät für den Dentalbereich, mit mindestens zwei Leuchtdioden (20) und/oder Leuchtdiodengruppen, mit unterschiedlichen spektralen Emissionsmaxima, wobei das Lichthärtgerät für das Polymerisieren einer polymerisierbaren Masse mit mindestens einem Photoinitiator (20), bestimmt ist. In Figur 3a sind die Emissionsspektren der LEDs (20) gezeigt, welche jeweils ein Emissionsmaximum bei etwa 380, 450, 520 und 820 nm Wellenlänge aufweisen.

Weiterhin ist in dieser Druckschrift offenbart, dass die Dioden, deren Emissionsspektrum bei etwa 380 nm liegt, für die Behandlung von Materialien geeignet sind, welche gegenüber UV-Licht empfindlicher sind, wohingegen LEDs, deren Emissionsspektrum bei etwa 450 nm liegt, für die Behandlung von Stoffgemische aus der Familie der "Camphoroquinones" geeignet sind. Dioden, deren Emissionsspektrum bei 820 nm liegt, erlauben eine Aufwärmung von Bleichstoffe. Somit kann das gewünschte spektrale Profil (204), wie in Figur 3b gezeigt ist, erhalten werden.

Aus der EP 151 686 A2 ist ein Verfahren zur Herstellung von kieferorthopädische Geräten und Apparaturen bekannt, das mit Halogenlampen arbeitet und 2 Photoinitiatoren mit unterschiedlichen Empfindlichkeitsmaximen verwendet.

Ausgehend von einem nächsten Stand der Technik, wie er in der Entgegenhaltung WO 00/45733 offenbart ist, liegt der Erfindung die Aufgabe zugrunde, ein Lichthärtgerät gemäß dem Oberbegriff von Anspruch 1 sowie ein Verfahren zum Polymerisieren gemäß dem Oberbegriff von Anspruch 12 zu schaffen, die eine verbesserte Maßhaltigkeit beim Lichthärten ermöglichen, aber dennoch flexibler bei der Anwendung verschiedener polymerisierbarer Massen ist.

Die Aufgabe wird erfindungsgemäß durch die Ansprüche 1 bzw. 12 gelöst. Vorteilhafte Weiterbildungen ergeben sich aus den Unteransprüchen.

Das erfindungsgemäße Lichthärtgerät bzw. das erfindungsgemäße Verfahren schafft mit einfachen Mitteln die Möglichkeit, die polymerisierbare Masse stufenweise auszuhärten, wobei in einer ersten Stufe ein teilpolymerisiertes, leicht bearbeitetes Material erhalten und in einer zweiten Stufe das fertig ausgehärtete Material erhalten wird.

Erfindungsgemäß besonders günstig ist es, dass eine Überschussentfernung möglich ist, indem trotzt der Verwendung lediglich eines Photoinitiators eine Teilpolymerisation realisierbar ist. Hierzu wird eine spektrale Überlappung zwischen dem Emissionsspektrum einer Leuchtdiode und dem Empfindlichkeitsspektrum des Photoinitiators ausgenutzt. Besonders günstig ist es hierbei, dass auch mit handelsüblichen, preisgünstigen Dentalmassen gearbeitet werden kann, also keine Spezialmassen mit zwei Photoinitiatoren erforderlich sind. Dies stellt einen signifikanten Preisvorteil allein deswegen dar, da die photopolysierbaren Massen mit lediglich einem Photoinitiator standardmäßig und in vergleichsweise großen Mengen hergestellt werden, was die Herstellung und Lagerhaltung deutlich verbilligt. Demgegenüber sind Spezialmassen wesentlich aufwendiger und teuer, allein schon, weil die Haltbarkeit derartiger Massen nicht unbegrenzt ist.

Demgegenüber ist es besonders günstig, dass das erfindungsgemäße Lichthärtgerät mit einer photopolymerisierbaren Masse mit lediglich einem Photoinitiator auskommt. Erfindungsgemäß wurde ein System aus dem eigentlichen Lichthärtgerät und der photopolymerisierbaren Masse in Kombination verwendet.

Überraschend ergibt sich mit der erfindungsgemäßen lediglich teilweisen Überlappung zwischen dem Emissionsspektrum der ersten Leuchtdiode und dem Empfindlichkeitsspektrum des Photoinitiators die Möglichkeit, eine teilweise Aushärtung zu erzielen, die in einer Härtpause die Überschussentfernung erlaubt, aber dennoch nicht ausschließt, dass nach der Härtpause eine Härtung vorgenommen wird.

Das Verhältnis der Intensitäten zwischen der Lichtabgabe während des ersten Zeitabschnitts und der Lichtabgabe während des zweiten Zeitabschnitts läßt sich in weiten Bereichen an die Erfordernisse anpassen, ebenso wie die Dauer des ersten und des zweiten Zeitabschnitts. Vorteilhaft ist die Strahlungsintensität der ersten Leuchtdiode auch mindestens 100 mW pro qcm festgelegt, während die Strahlungsintensität der zweiten Leuchtdiode mindestens 300, bevorzugt 600 bis 1000 mW pro qcm betragen sollte. Bei einer größeren Strahlungsintensität der ersten Leuchtdiode und/oder eines längeren ersten Zeitabschnitts ist das teilpolymerisierte Material etwas fester, so dass die Überschussentfernung auch mit handelsüblichen Dentalinstrumenten maschinell erfolgen kann, während bei einer geringeren Strahlungsintensität und/oder einem kürzeren ersten Zeitabschnitt auch ein Modellieren bzw. Bearbeiten erfolgen kann.

Wesentlich ist es jedenfalls, dass die Spektren der ersten Leuchtdiode und der Empfindlichkeit des Photoinitiators deutlich voneinander verschieden sind, und insbesondere die Maxima einen deutlichen Wellenlängenabstand aufweisen.

Bevorzugt ist das Intensitätsmaximum der ersten Leuchtdiode so gewählt, dass seine Wellenlänge größer als die Wellenlänge des Empfindlichkeistmaximums des Photoinitiators ist. Beispielsweise kann Campherchinon als Photoinitiator verwendet werden, und die erste Leuchtdiode kann als grüne Leuchtdiode ausgebildet sein. Die Wellenlängenmaxima betragen dann etwa 470 und 505 nm, sind also deutlich verschieden.

Gemäß einer besonders günstigen Ausgestaltung ist die zweite Leuchtdiode so gewählt, dass ihr Emissionsmaximum mit dem Empfindlichkeitsmaximum des Photoinitiators zusammenfällt, und dass zugleich die Spektren so weit wie möglich übereinstimmen.

Es versteht sich aber von selbst, dass anstelle einer Leuchtdiode bzw. mindestens einer Leuchtdiode auch Gruppen von LEDs bzw. sogenannte Pads zum Einsatz kommen können. Auf die deutschen Patentanmeldungen 101 25 340.0, 101 25 343.5 und 101 27 416.5 wird insofern hingewiesen.

Weitere Vorteile, Einzelheiten und Merkmale ergeben sich aus der nachstehenden Beschreibung eines Ausführungsbeispiels anhand der Zeichnung.

Es zeigen:
- Fig. 1: ein schematisch dargestelltes Lichthärtgerät mit zwei Leuchtdioden unterschiedlicher Emissionsspektren;
- Fig. 2: ein Diagramm zur Darstellung der Emissions- und Empfindlichkeitsspektren für das erfindungsgemäße Lichthärtgerät in der Ausführungsform gemäß Fig. 1; und
- Fig. 3: ein Zeitdiagramm zur Darstellung der Zeitabschnitte für den Betrieb des erfindungsgemäßen Lichthärtgeräts.

Das in Fig. 1 dargestellte Lichthärtgerät 10 ist als Handgerät ausgebildet, das entweder über ein nicht dargestelltes Kabel netzbetrieben ist oder über einen Batterie- oder Akkusatz für den netzunabhängigen Betrieb verfügt. Es weist ein nicht dargestelltes Gebläse zur Kühlung seiner Lichtquelle auf.

Erfindungsgemäß sind mehrere Leuchtdioden oder LEDs vorgesehen, wobei der Begriff Leuchtdioden hier auch Laserdioden und andere Festkörperstrahler einschließen soll. In Fig. 1 ist eine erste, grüne Leuchtdiode 12 dargestellt. Die Leuchtdiode 12 ist neben einer zweiten, blauen Leuchtdiode 14 angeordnet, so dass von einer der Leucht dioden emittiertes Licht wahlweise einem Lichtleiter 16 zugeführt wird, durch den hindurch es hindurchtritt und den Dentalbereich beaufschlagen kann.

Auch wenn hier jeweils lediglich eine Leuchtdiode 12 und eine Leuchtdiode 14 dargestellt sind, versteht es sich, dass in der Regel in der Praxis je eine Mehrfachanordnung von gleichen Leuchtdioden verwendet wird, die als Gruppe zusammengeschaltet sind und gemeinsam betrieben werden können.

Erfindungsgemäß ist es günstig, wenn die Leuchtdioden 12 und 14 mit einer Steuervorrichtung 18, die in Fig. 1 schematisch dargestellt ist, angesteuert werden. Die Steuervorrichtung erlaubt ein programmgesteuertes Einschalten, das hinsichtlich der Intensität und der Zeitdauer vorgegeben ist, aber in gewissen Grenzen auch über Programmierungsschritte vom Benutzer änderbar ist, wobei es möglich ist, eine Anpassung an das verwendete Dentalmaterial vorzusehen.

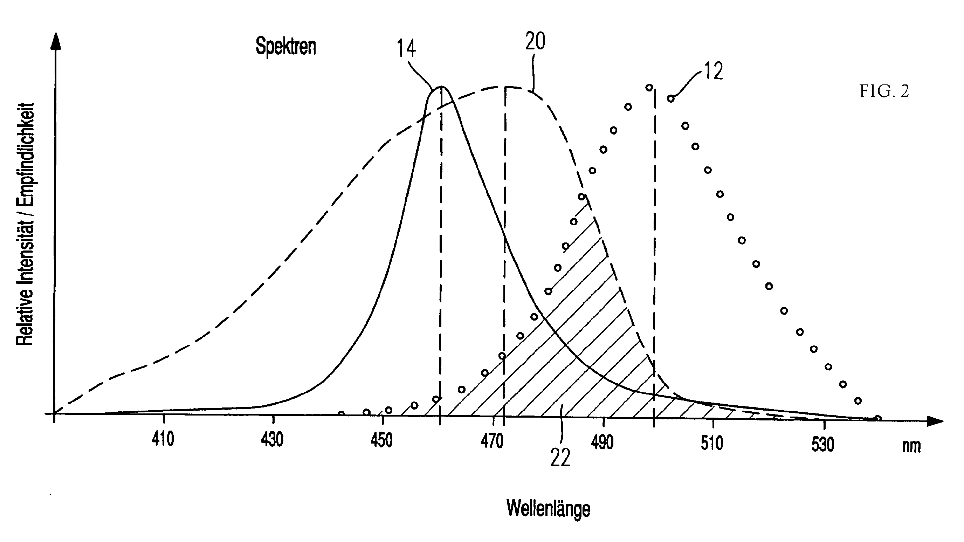

In Fig. 2 ist ein Diagramm zur Darstellung der Emissionsspektren der grünen und der blauen Leuchtdiode 12 und 14 aufgetragen. Beide Emissionsspektren verlaufen in an sich bekannter Weise im Wesentlichen nach der Art einer Gausskurve, wobei das Maximum der Emission der grünen Leuchtdiode bei etwa 505 nm liegt, und das Maximum der Emission der blauen Leuchtdiode bei etwa 460 nm liegt. Die Steilheit der Flanken der Gausskurven ist so, dass der Emissionswerte der blauen Leuchtdiode beim Emissionsmaximum der grünen Leuchtdiode bereits fast auf Null abgefallen ist, während umgekehrt der Emissionswert der grünen Leuchtdiode beim Emissionsmaximum der blauen Leuchtdiode fast Null erreicht hat.

Zusätzlich ist in Fig. 2 die Empfindlichkeit von Campherchinon 20 als Photoinitiator aufgetragen. Das Empfindlichkeitsspektrum über die Wellenlänge überlappt stark mit dem Emissionsspektrum der blauen Leuchtdiode.

Erfindungsgemäß besteht ein Überlappungsbereich 22 zwischen dem Campherchinon-Spektrum 20 und dem Spektrum der grünen Leuchtdiode 12. Der Überlappungsbereich liegt im Wesentlichen zwischen 460 und 500 nm. Durch Einschaltung der grünen Leuchtdiode 12 wird Campherchinon 20 in der Dentalmasse partiell angeregt, so dass sich eine Vorhärtung des Dentalmaterials ergibt.

Wie aus Fig. 2 ersichtlich ist, stimmen die Maxima der blauen Leuchtdiode 14 und von Campherchinon 20 nicht ganz überein. Vielmehr liegt das spektrale Maximum der blauen Leuchtdiode etwas unterhalb des Empfindlichkeitsmaximums von Campherchinon, etwa um 9 nm zu kürzeren Wellenlängen hin verlagert. Die Steilheit der Emissionskurve der blauen Leuchtdiode ist deutlich größer als die Steilheit der Flanken des Spektrums der Empfindlichkeitskurve von Campherchinon, insbesondere bei den kürzeren Wellenlängen oder der - in der Darstellung gemäß Fig. 2 - linken Flanke.

Die Darstellung in Fig. 2 ist normiert, so dass die Maxima der blauen Leuchtdiode 14, der grünen Leuchtdiode 12 und von Campherchinon 20 auf der gleichen Höhe eingetragen sind. Bei dieser Darstellung sind die Spektren so gewählt, dass das Campherchinon-Spektrum 20 das Spektrum der blauen Leuchtdiode 14 umgibt, also rechts und links vom Maximum je deutlich größere Werte aufweist. Die so gebildeten Differenzflächen der Spektren sind rechts und links des Maximums der blauen Leuchtdiode 14 etwa gleich groß, so dass das Spektrum der blauen Leuchtdiode so betrachtet etwa symmetrisch zum Spektrum von Campherchinon vorliegt. Es hat sich gezeigt, dass durch diese im Wesentlichen symmetrische Wahl der Spektren eine besonders gute Endhärte erzielbar ist. Wenn andererseits die Maxima der blauen Leuchtdiode 14 und von Campherchinon 20 auf die gleiche Wellenlänge gewählt werden, entstehen zueinander assymmetrische Spektren, die etwas verschlechterte Härtergebnisse zeigen.

Wiederum von der Fläche her betrachtet, beträgt der Überlappungsbereich 22 zwischen der grünen Leuchtdiode 12 und Campherchinon 20 etwa ein Viertel der Gesamtfläche des Spektrums von Campherchinon. Eine derartige Bemessung hat sich als besonders günstig für die Realisierung der Teilpolymerisation herausgestellt.

Die erwünschte Härte lässt sich auch leicht über die Strahlungsdauer einstellen. Gemäß Fig. 3 wird die grüne Leuchtdiode 12 während eine ersten Zeitabschnitts 24 mit einer Strahlungsintensität von 500 mW pro qcm eingeschaltet. Nach Ablauf des ersten Zeitabschnitts 24 ist die Dentalmasse soweit durchgehärtet, dass eine Nachbearbeitung zur Überschussentfernung erfolgen kann. Dies geschieht während eines Überschuss-Entfernungszeitabschnitts 26, der so lange sein kann, wie der Zahnarzt für die Überschussentfernung benötigt.

Hieran anschließend wird die blaue Leuchtdiode 14 mit einer Strahlungsintensität von 1000 mW pro qcm eingeschaltet, und zwar während eines zweiten Zeitabschnitts 28.

Im dargestellten Ausführungsbeispiel sind beide Zeitabschnitte 24 und 28 gleich lang gewählt. Es versteht sich, dass darauf auch eine Anpassung an die Erfordernisse vorgenommen werden kann.

## Patentansprüche

1. Lichthärtgerät (10) für den Dentalbereich, mit mindestens zwei Leuchtdioden (12,14) und/oder Leuchtdiodengruppen mit unterschiedlichen spektralen Emissionsmaxima, wobei das Lichthärtgerät (10) für das polymerisieren einer polymerisierbaren Masse bestimmt ist, die lediglich einen Photoinitiator (20) aufweist, der ein Empfindlichkeitsspektrum mit einer maximalen spektralen Empfindlichkeit von etwa 470 nm aufweist, und wobei die maximale spektrale Empfindlichkeit des Photoinitiators (20) von dem Emissionsmaximum der ersten Leuchtdiode (12) verschieden ist, **dadurch gekennzeichnet, dass** das Emissionsspektrum der ersten Leuchtdiode (12) ein Emissionsmaximum von etwa 505 nm und eine lediglich teilweise Überlappung mit dem Empfindlichkeitsspektrum des Photoinitiators (20) aufweist und das Emissionsspektrum der zweiten Leuchtdiode (14) ein Emissionsmaximum von etwa 460 nm und eine demgegenüber größere Überlappung mit dem Empfindlichkeitsspektrum des Photoinitiators (20) aufweist.

2. Lichthärtgerät nach Anspruch 1,
**dadurch gekennzeichnet, dass** eine Steuervorrichtung (18) vorgesehen ist, mit welcher die erste Leuchtdiode (12) einschaltbar ist, bevor die zweite Leuchtdiode (14) einschaltbar ist, und dass die Steuervorrichtung (18) die erste Leuchtdiode (12) für den ersten Zeitabschnitt (24) und die zweite Leuchtdiode (14) für den zweiten Zeitabschnitt (28) einschaltet, wobei der erste und der zweite Zeitabschnitt vorgegeben sind.

3. Lichthärtgerät nach Anspruch 2,
**dadurch gekennzeichnet, dass** durch die Steuervorrichtung ein programmgesteuertes Einschalten der Leuchtdioden, das hinsichtlich Intensität und Zeitdauer vorgegeben ist, ermöglicht ist, wobei eine Anpassung an das verwendete Material seitens des Benutzers über Programmierungsschritte realisierbar ist.

4. Lichthärtgerät nach Anspruch 1,
**dadurch gekennzeichnet, dass** der Photoinitiator Campherchinon (20) ist und ein Empfindlichkeitsmaximum von etwa 470 nm aufweist und das Emissionsmaximum der ersten Leuchtdiode (12) eine größere Wellenlänge als 470nm aufweist.

5. Lichthärtgerät nach Anspruch 4,
**dadurch gekennzeichnet, dass** die zweite Leuchtdiode (14) derart gewählt ist, dass sich das Empfindlichkeitsmaximum von Campherchinon (20) um weniger als 20 nm, insbesondere weniger als 15 nm, von ihrem Emissionsmaximum unterscheidet, wobei das Empfindlichkeitsmaximum von Campherchinon (20) vorzugsweise bei einer Wellenlänge vorgesehen ist, die um etwa 10 nm größer als die Wellenlänge des Emissionsmaximums der zweiten Leuchtdiode (14) ist.

6. Lichthärtgerät nach einem der Ansprüche 4 oder 5,
**dadurch gekennzeichnet, dass** die zweite Leuchtdiode (14) ein Emissionsspektrum mit mindestens einer steileren Flanke, bevorzugt mit steileren Flanken als das Empfindlichkeitsspektrum von Campherchinon (20) aufweist, wobei die beiden Emissionsspektren im Wesentlichen nach der Art einer Gaußkurve verlaufen, und dass das Emissionsspektrum der zweiten Leuchtdiode (14) vom Flächeninhalt her betrachtet, im Wesentlichen symmetrisch innerhalb des Empfindlichkeitsspektrums von Campherchinon (20) vorgesehen ist.

7. Lichthärtgerät nach einem der vorhergehenden Ansprüche,
**dadurch gekennzeichnet, dass** das Emissionsspektrum der ersten Leuchtdiode (12) beim Empfindlichkeitsmaximum des Photoinitiators (20) deutlich geringer, insbesondere um eine Zehnerpotenz, als die Emission beim Emissionsmaximum ist, so dass eine teilweise Aushärtung der zu polymerisierenden Masse realisierbar ist.

8. Lichthärtgerät nach einem der vorhergehenden Ansprüche,
**dadurch gekennzeichnet, dass** die über das Spektrum integrierte Strahlungsintensität der ersten Leuchtdiode (12) mindestens 100mW pro qcm beträgt.

9. Lichthärtgerät nach einem der vorhergehenden Ansprüche,
**dadurch gekennzeichnet, dass** die Strahlungsintensität der zweiten Leuchtdiode (14) über das Spektrum der zweiten Leuchtdiode (14) betrachtet mindestens 300 mW pro qcm, bevorzugt 600 bis 1000 mW pro qcm beträgt.

10. Lichthärtgerät nach einem der vorhergehenden Ansprüche,
**dadurch gekennzeichnet, dass** je eine Mehrzahl erster Leuchtdioden und eine Mehrzahl zweiter Leuchtdioden vorgesehen sind, die je gemeinsam ansteuerbar sind.

11. Lichthärtgerät nach einem der vorhergehenden Ansprüche,
**dadurch gekennzeichnet, dass** die erste Leuchtdiode (12) eine geringere Intensität als die zweite Leuchtdiode (14) aufweist.

12. Verfahren zum Polymerisieren von polymerisierbaren Massen mit lediglich einen Photoinitiator für Dentalzwecke mit einem Lichthärtgerät (10), das Strahlung der Masse für einen vorgegebenen Zeitabschnitt zuführt, wobei das Lichthärtgerät (10) mindestens zwei Leuchtdioden (12, 14) und/oder Leuchtdiodengruppen mit unterschiedlichen Emissionsspektren aufweist, wobei das Verfahren nicht am menschlichen oder tierischen Körper angewendet wird, wobei
dass das Lichthärtgerät (10) während eines ersten Zeitabschnitts (24) mit einer ersten Leuchtdiode (12) eingeschaltet wird, die ein Emissionsspektrum aufweist, das mit dem Empfindlichkeitsspektrum des Photoinitiators (20) der Masse lediglich teilweise überlappt, wobei eine zweite Leuchtdiode (14), deren Emissionsspektrum im Wesentlichen mit dem Empfindlichkeitsspektrum des Photoinitiators (20) übereinstimmt, nach der ersten Leuchtdiode (12) während eines zweiten Zeitabschnitts (28) eingeschaltet wird.

13. Verfahren nach Anspruch 12,
**dadurch gekennzeichnet, dass** die Masse mit der ersten Leuchtdiode (12) während des ersten Zeitabschnitts (24) lediglich teilweise ausgehärtet wird, dann ein Überschuss entfernt wird und anschließend hieran die Masse mit der zweiten Leuchtdiode (14) während des zweiten Zeitabschnitts (28) vollständig gehärtet wird.

## Claims

1. A light-curing apparatus (10) for the dental sector, with at least two light-emitting diodes (12,14) and/or light-emitting diode groups with different spectral emission maxima, wherein the light-curing apparatus (10) is intended for the polymerisation of a polymerisable material which has only one photoinitiator (20) which has a sensitivity spectrum with a maximum spectral sensitivity of approximately 470 nm, and wherein the maximum spectral sensitivity of the photoinitiator (20) is different from the emission maximum of the first light-emitting diode (12), **characterised in that** the emission spectrum of the first light-emitting diode (12) has an emission maximum of approximately 505 nm and has only partial overlap with the sensitivity spectrum of the photoinitiator (20) and the emission spectrum of the second light-emitting diode (14) has an emission maximum of approximately 460 nm but has greater overlap with the sensitivity spectrum of the photoinitiator (20).

2. A light-curing apparatus according to Claim 1, **characterised in that** a control device (18) is provided, with which the first light-emitting diode (12) can be switched on before the second light-emitting diode (14) can be switched on, and **in that** the control device (18) switches on the first light-emitting diode (12) for the first period of time (24) and the second light-emitting diode (14) for the second period of time (28), wherein the first and second periods of time are predetermined.

3. A light-curing apparatus according to Claim 2, **characterised in that** the control device makes possible program-controlled switching on of the light-emitting diodes which is of predetermined intensity and duration, wherein adaptation to the material used can be carried out on the part of the operator via programming steps.

4. A light-curing apparatus according to Claim 1, **characterised in that** the photoinitiator is camphor quinone (20) and has a sensitivity maximum of approximately 470 m, and the emission maximum of the first light-emitting diode (12) has a wavelength higher than 470 nm.

5. A light-curing apparatus according to Claim 4, **characterised in that** the second light-emitting diode (14) is selected so that the sensitivity maximum of camphor quinone (20) differs by less than 20 nm, in particular less than 15 nm, from its emission maximum, wherein the sensitivity maximum of camphor quinone (20) is preferably provided at a wavelength which is approximately 10 nm higher than the wavelength of the emission maximum of the second light-emitting diode (14).

6. A light-curing apparatus according to Claim 4 or 5, **characterised in that** the second light-emitting diode (14) has an emission spectrum with at least one steeper flank, preferably with steeper flanks than the sensitivity spectrum of camphor quinone (20), wherein the two emission spectra extend substantially in the manner of a Gaussian curve, and **in that** the emission spectrum of the second light-emitting diode (14), viewed topographically, is provided substantially symmetrically within the sensitivity spectrum of camphor quinone (20).

7. A light-curing apparatus according to any one of the preceding Claims, **characterised in that** the photoinitiator is camphor quinone (20) and has a sensitivity maximum of approximately 470 nm, and the emission maximum of the first light-emitting diode (12) has a higher wavelength than 470 nm.

8. A light-curing apparatus according to any one of the preceding Claims, **characterised in that** the radiation intensity of the first light-emitting diode (12) integrated over the spectrum is at least 100mW per cm2.

9. A light-curing apparatus according to any one of the preceding Claims, **characterised in that** the radiation intensity of the second light-emitting diode (14), viewed over the spectrum of the second light-emitting diode (14), is at least 300 mW per cm2, preferably 600 to 1000 mW per cm2.

10. A light-curing apparatus according to any one of the preceding Claims, **characterised in that** in each case a plurality of first light-emitting diodes and a plurality of second light-emitting diodes are provided, which can each be activated together.

11. A light-curing apparatus according to any one of the preceding Claims, **characterised in that** the first light-emitting diode (12) has a lower intensity than the second light-emitting diode (14).

12. A method of polymerising polymerisable materials with only one photoinitiator for dental purposes with a light-curing apparatus (10), which irradiates the material for a predetermined period of time, wherein the light-curing apparatus (10) has at least two light-emitting diodes (12,14) and/or light-emitting diode groups with different emission spectra, wherein the method is not applied to the human or animal body, wherein the light-curing apparatus (10) is switched on during a first period of time (24) with a first light-emitting diode (12) which has an emission spectrum which only partially overlaps with the sensitivity spectrum of the photoinitiator (20) of the material, wherein a second light-emitting diode (14), the emission spectrum of which corresponds substantially to the sensitivity spectrum of the photoinitiator (20), is switched on after the first light-emitting diode (12) during a second period of time (28).

13. A method according to Claim 12, **characterised in that** the material of the first light-emitting diode (12) is cured only partially during a first period of time (24), then any excess is removed and subsequently the material is fully cured with the second light-emitting diode (14) during the second period of time (28).

## Revendications

1. Appareil de photopolymérisation (10) pour le domaine dentaire, avec au moins deux diodes électroluminescentes (12, 14) et/ou groupes de diodes électroluminescentes avec des maxima d'émission spectraux différents, dans lequel l'appareil de photopolymérisation (10) est destiné à la polymérisation d'une masse polymérisable qui comporte simplement un photo-initiateur (20) qui présente un spectre de sensibilité avec une sensibilité spectrale maximale d'environ 470 nm et dans lequel la sensibilité spectrale maximale du photo-initiateur (20) est différente du maximum d'émission de la première diode électroluminescente (12), **caractérisé en ce que** le spectre d'émission de la première diode électroluminescente (12) présente un maximum d'émission d'environ 505 nm et un chevauchement seulement partiel avec le spectre de sensibilité du photo-initiateur (20) et le spectre d'émission de la seconde diode électroluminescente (14) présente un maximum d'émission d'environ 460 nm et, par contre, un chevauchement plus important avec le spectre de sensibilité du photo-initiateur (20).

2. Appareil de photopolymérisation selon la revendication 1, **caractérisé en ce qu'**il est prévu un dispositif de commande (18) avec lequel la première diode électroluminescente (12) peut être mise sous tension avant que la seconde diode électroluminescente (14) puisse être mise sous tension et **en ce que** le dispositif de commande (18) met sous tension la première diode électroluminescente (12) pour la première phase (24) et la seconde diode électroluminescente (14) pour la seconde phase (28), la première et la seconde phase étant prédéterminées.

3. Appareil de photopolymérisation selon la revendication 2, **caractérisé en ce que** le dispositif de commande permet une mise sous tension commandée par programme des diodes électroluminescentes qui est prédéfinie en termes d'intensité et de durée, une adaptation au matériau utilisé par l'utilisateur pouvant être réalisée au moyen d'étapes de programmation.

4. Appareil de photopolymérisation selon la revendication 1, **caractérisé en ce que** le photoinitiateur est du campherchinon (20) et présente un maximum de sensibilité d'environ 470 nm et le maximum d'émission de la première diode électroluminescente (12) présente une longueur d'onde supérieure à 470 nm.

5. Appareil de photopolymérisation selon la revendication 4, **caractérisé en ce que** la seconde diode électroluminescente (14) est sélectionnée de telle manière que le maximum de sensibilité du campherchinon (20) se différencie de moins de 20 nm, en particulier de moins de 15 nm, de son maximum d'émission, le maximum de sensibilité du campherchinon (20) étant prévu, de préférence, avec une longueur d'onde qui est d'environ 10 nm supérieure à la longueur d'onde du maximum d'émission de la seconde diode électroluminescente (14).

6. Appareil de photopolymérisation selon l'une quelconque des revendications 4 ou 5, **caractérisé en ce que** la seconde diode électroluminescente (14) présente un spectre d'émission avec au moins un flanc plus raide, de préférence avec des flancs plus raides, que le spectre de sensibilité du campherchinon (20), les deux spectres d'émission progressant sensiblement à la manière d'une courbe de Gauss, et **en ce que** le spectre d'émission de la seconde diode électroluminescente (14), du point de vue de l'aire de surface, est prévu sensiblement symétrique à l'intérieur du spectre de sensibilité du campherchinon (20).

7. Appareil de photopolymérisation selon l'une quelconque des revendications précédentes, **caractérisé en ce que** le spectre d'émission de la première diode électroluminescente (12), dans le cas du maximum de sensibilité du photo-initiateur (20), est nettement inférieur, en particulier d'une décimale, à l'émission dans le cas du maximum d'émission, de sorte qu'un durcissement partiel de la masse à polymériser peut être réalisé.

8. Appareil de photopolymérisation selon l'une quelconque des revendications précédentes, **caractérisé en ce que** l'intensité de rayonnement de la première diode électroluminescente (12) intégrée sur le spectre est d'au moins 100 mW par cm².

9. Appareil de photopolymérisation selon l'une quelconque des revendications précédentes, **caractérisé en ce que** l'intensité de rayonnement de la seconde diode électroluminescente (14), considérée sur le spectre de la seconde diode électroluminescente (14), est d'au moins 300 mW par cm², de préférence de 600 à 1000 mW par cm².

10. Appareil de photopolymérisation selon l'une quelconque des revendications précédentes, **caractérisé en ce qu'**il est prévu une pluralité de premières diodes électroluminescentes et une pluralité de secondes diodes électroluminescentes qui peuvent être commandées conjointement.

11. Appareil de photopolymérisation selon l'une quelconque des revendications précédentes, **caractérisé en ce que** la première diode électroluminescente (12) présente une intensité inférieure à celle de la seconde diode électroluminescente (14).

12. Procédé pour la photopolymérisation de masses polymérisables avec simplement un photo-initiateur pour des applications dentaires avec un appareil de photopolymérisation (10) qui envoie un rayonnement à la masse pendant une phase prédéterminée, dans lequel l'appareil de photopolymérisation (10) comporte au moins deux diodes électroluminescentes (12, 13) et/ou groupes de diodes électroluminescentes avec des spectres d'émission différents, le procédé n'étant pas appliqué sur le corps humain ou animal, l'appareil de photopolymérisation (10) étant mis sous tension pendant une première phase (24) avec une première diode électroluminescente (12) qui présente un spectre d'émission qui se chevauche seulement partiellement avec le spectre de sensibilité du photo-initiateur (20) de la masse, une seconde diode électroluminescente (14) dont le spectre d'émission coïncide sensiblement avec le spectre de sensibilité du photo-initiateur (20) étant mise sous tension après la première diode électroluminescente (12) pendant une seconde phase (28).

13. Procédé selon la revendication 12, **caractérisé en ce que** la masse est durcie seulement partiellement avec la première diode électroluminescente (12) pendant la première phase (24), puis un excédent est enlevé et ensuite la masse est durcie complètement avec la seconde diode électroluminescente (14) pendant la seconde phase (28).
